Europäisches Patentamt

(19) European Patent Office

Office européen des brevets

(11) Publication number: **0 230 344 B1**

(12) **EUROPEAN PATENT SPECIFICATION**

(45) Date of publication of patent specification:
10.04.91 Bulletin 91/15

(51) Int. Cl.⁵: **B32B 27/08, B32B 27/30,**
**B32B 27/32, B32B 27/34,**
**B32B 27/36**

(21) Application number: 87300047.5

(22) Date of filing: 06.01.87

(54) **Laminated structure.**

(30) Priority: 07.01.86 JP 254/86

(43) Date of publication of application:
29.07.87 Bulletin 87/31

(45) Publication of the grant of the patent:
10.04.91 Bulletin 91/15

(84) Designated Contracting States:
BE DE FR GB IT NL

(56) References cited:
EP-A- 0 125 107
EP-A- 0 181 632
US-A- 4 058 647

(73) Proprietor: MITSUI PETROCHEMICAL
INDUSTRIES, LTD.
2-5, Kasumigaseki 3-chome Chiyoda-ku
Tokyo 100 (JP)

(72) Inventor: Sato, Koichiro
4-8, Waki 2-chome Waki-machi
Kuga-gun Yamaguchi-ken (JP)
Inventor: Nakagawa, Mikio
232-6, Ohno-cho
Saiki-gun Hiroshima-ken (JP)

(74) Representative: Myerscough, Philip Boyd et al
J.A.Kemp & Co. 14, South Square Gray's Inn
London, WC1R 5EU (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a laminated structure composed of a plurality of polymer layers. More specifically, it relates to a laminated structure which comprises a polyester layer and a saponified olefin/vinyl acetate copolymer layer or a polyamide layer and has transparency and resistance to permeation to gases and excellent interfacial adhesion, particularly excellent interfacial adhesion after stretching.

Polyester resins typified by polyethylene terephthalate (to be sometimes referred to as PET) are extensively used as films, sheets and packaging materials such as containers by utilizing their excellent properties such as high mechanical strength, rigidity, thermal resistance, chemical resistance, oil resistance and transparency. However, the polyester resins are not without defects. For example, they have the defect that containers made of the polyester resins cannot be sufficiently heat-set, and they have no sufficient resistance to gas permeation. In particular, the insufficient gas permeation resistance is attributed to the inherent properties of the polyester resins, and is difficult to overcome by molding techniques.

It may also be possible to improve the gas permeation resistance of the polyester resins by laminating a resin having better gas permeation resistance than the polyester resins, such as polyvinylidene chloride, a saponification product of olefin/vinyl acetate copolymer, or polyamides. Such resins, however, have poor adhesion to the polyester resins. Even a three-layer structure composed of two layers of a polyester resin and a layer of such a resin having high gas permeation resistance interposed between them is likely to undergo partial delamination during stretching or during use and decrease in gas permeation resistance.

A composition composed of 60 to 97% by weight of a polyolefin modified with an unsaturated carboxylic acid or its anhydride and 40 to 3% by weight of a rubbery material was proposed as a composition having excellent adhesion to a polyester resin, a saponified ethylene/vinyl acetate copolymer, or a polyamide resin (U.S. Patent No. 4,058,647). This composition has an excellent initial adhesion strength, but has reduced transparency. If a laminated structure of the polyester resin and this composition is stretched in order to improve the rigidity of the polyester resin, the adhesion strength between the two layers is greatly reduced, and it has been found that the resulting laminate gives rise to problems when used as a packaging.

EP-A-125107 describes three layer films comprising, in order, a first heat sealable layer (chosen from low density polyethylene, ethylene methyl acrylate, ethylene vinyl acetate and ionomer), a second layer of a modified olefin or olefin copolymer adhesive and a third layer of metallised oriented polyethylene terephthalate.

The present invention provides a laminated structure comprising, laminated in the order stated,

(A) a layer of polyester,

(B) a layer of modified ethylene/alpha-olefin random copolymer, or a mixture of modified copolymer with unmodified copolymer, either the modified copolymer or the mixture containing 0.01 to 10% by weight, based on the trunk ethylene/alpha-olefin random copolymer, of an unsaturated carboxylic acid or derivative thereof grafted thereto, and having an ethylene content of 75 to 95 mole%, a melt flow rate of 0.1 to 50 g/10 min., a density of 0.850 to 0.905 g/cm³ and a crystallinity, determined by X-ray, of less than 30%, and

(C) a layer of a saponified olefin/vinyl acetate copolymer having an olefin content of 15 to 60 mole% and a degree of saponification of at least 50%, or a polyamide resin.

The thermoplastic polyester (A) denotes polyesters composed of units of dihydroxy compounds selected from aliphatic glycols such as ethylene glycol, propylene glycol, 1,4-butanediol, neopentyl glycol and hexamethylene glycol, alicyclic glycols such as cyclohexanedimethanol, aromatic dihydroxy compounds such as bisphenol or mixtures of at least two types of these and units of dicarboxylic acids selected from aromatic dicarboxylic acids such as terephthalic acid, isophthalic acid and 2,6-naphthalenedicarboxylic acid, aliphatic dicarboxylic acids such as oxalic acid, succinic acid, adipic acid, sebacic acid and undecanedicarboxylic acid, alicyclic dicarboxylic acids such as hexahydroterephthalic acid, or mixtures of at least two types of these. These polyesters may be modified with small amounts of trihydric or higher polyhydroxy compounds such as triols or tricarboxylic acids, or polycarboxylic acids so long as the polyesters remain thermoplastic. Specific examples of the thermoplastic polyesters are polyethylene terephthalate, polybutylene terephthalate, and polyethylene isophthalate terephthalate copolymer.

The saponified olefin/vinyl acetate copolymer constituting the layer (C) of the laminated structure of the invention is a saponification product of an olefin/vinyl acetate copolymer having an olefin content of 15 to 60 mole%, preferably 25 to 50 mole%. The saponification product has a degree of saponification of at least 50%, more preferably at least 90%. If the olefin content is less than 15 mole%, the saponified copolymer tends to be not entirely satisfactory in respect of resistance to thermal decomposition, melt-processability, stretchability and water resistance (moisture absorption and swellability). If the olefin content exceeds 60 mole% or the degree of saponification is less than 50%, the copolymer has poor resistance to gas permeation.

Alpha-olefins having 1 to 18 carbon atoms are preferred as the olefin for composing the saponified olefin-/vinyl acetate copolymer. Examples include ethylene, propylene, 1-butene, 1-hexene, 4-methyl-1-pentene, 1-octene, 1-decene, 1-tetradecene and 1-octadecene.

Saponified olefin/vinyl acetate copolymer is especially preferred as the saponified olefin/vinyl acetate copolymer in view of its mechanical strength and processability.

Examples of the polyamide resin (C) constituting the laminated structure of the invention include polyamides obtained by polycondensation of aliphatic, alicyclic or aromatic diamines such as hexamethylenediamine, decamethylenediamine, dodecamethylenediamine, 2,2,4- or 2,4,4-trimethylhexamethylenediamine, 1,3- or 1,4-bis(aminomethyl)cyclohexane, bis(p-aminocyclohexylmethane) and m- or p-xylylenediamine and aliphatic, alicyclic or aromatic dicarboxylic acids such as adipic acid, suberic acid, sebacic acid, cyclohexanedicarboxylic acid, terephthalic acid and isophthalic acid ; polyamides obtained by polycondensation of aminocarboxylic acids such as epsilon-aminocaproic acid and 11-aminoundecanoic acid ; polyamides obtained by ring-opening polymerization of lactams such as epsilon-caprolactam and omega-laurolactam ; copolyamides composed of two or more of these components ; and mixtures of these polyamides. Specific examples are nylon 6, nylon 66, nylon 610, nylon 9, nylon 11, nylon 12, nylon 6/66, nylon 66/610 and nylon 6/11. There is no restriction on the molecular weights of these polyamides. Usually polyamides having a relative viscosity $\eta_r$ (measured in 98% sulfuric acid in accordance with JIS K-6819) of at least 0.5, preferably at least 2.0, are conveniently used in this invention.

The laminated structure of this invention comprises the layer (B) of a modified ethylene/alpha-olefin random copolymer as an interlayer for firmly bonding the layers (A) and (C).

The modified ethylene/alpha-olefin random copolymer (to be sometimes referred to simply as the modified copolymer) contains about 0.01 to 10% by weight, preferably 0.1 to 5% by weight, based on the ethylene/alpha-olefin random copolymer as a trunk, of an unsaturated carboxylic acid or its derivative. If the amount of the unsaturated carboxylic acid or its derivative grafted is less than 0.01% by weight, the adhesion of the interlayer to the polyester layer (A) and the saponified olefin/vinyl acetate copolymer layer or the polyamide layer (C) cannot be improved. On the other hand, if it exceeds 10% by weight, the modified copolymer is partly crosslinked and is inferior in processability, transparency and adhesion strength.

The modified copolymer has an ethylene content of 75 to 95 mole%, preferably 77 to 93 mole%.

The modified copolymer also has a melt flow rate (MFR$_2$ in accordance with ASTM D1238L) of 0.1 to 50 g/10 min., preferably 0.2 to 20 g/10 min.

The modified copolymer has a density of 0.850 to 0.905 g/cm³, preferably 0.860 to 0.900 g/cm³.

Finally, the modified copolymer has a crystallinity of less than 30%, preferably less than 10%, more preferably less than 7%. If the MFR$_2$ is outside the above-specified range, the viscosity of the modified copolymer is too high or too low and has poor processability and adhesion strength.

If the modified copolymer has a density of more than 0.905 g/cm³ and a crystallinity, determined by X-ray, of more than 30%, the modified copolymer is inferior in adhesion strength after it has been subjected to stretching.

Alpha-olefins having 3 to 20 carbon atoms are suitable as the alpha-olefin constituting the modified copolymer. Specific examples are propylene, 1-butene, 1-hexene, 4-methyl-1-pentene, 1-octene, 1-decene, 1-tetradecene and 1-octadecene. These alpha-olefins may be used singly or in combination.

The modified copolymer of layer (B) can be produced by grafting the unsaturated carboxylic acid or its derivative to an ethylene/alpha-olefin random copolymer. The ethylene/alpha-olefin random copolymer before modification usually has a melt flow rate (MFR$_2$) of 0.1 to 70 g/10 min., and has the same density, ethylene content and crystallinity as the modified copolymer.

Examples of the unsaturated carboxylic acid or its derivative to be grafted include unsaturated carboxylic acids such as acrylic acid, maleic acid, fumaric acid, tetrahydrophthalic acid, itaconic acid, citraconic acid, crotonic acid, isocrotonic acid, and Nadic acid® (endo-cis-bicyclo[2,2,1]hept-5-ene-2,3-dicarboxylic acid) ; and derivatives thereof such as acid halides, amides, imides, anhydrides and esters. Specific examples of the derivatives are malenyl chloride, maleimide, maleic anhydride, citraconic anhydride, monomethyl maleate, dimethyl maleate, and glycidyl maleate. Among these, the unsaturated dicarboxylic acids and their anhydrides are preferred. Maleic acid, Nadic acid® and their anhydrides are especially preferred.

Various known methods can be used to produce the modified copolymer by grafting a grafting monomer selected from the unsaturated carboxylic acids and their derivatives to the unmodified ethylene/alpha-olefin random copolymer. For example, the unmodified ethylene/ alpha-olefin random copolymer is melted, and the grafting monomer is added to it and graft-copolymerized. Alternatively, the unmodified ethylene/alpha-olefin random copolymer is dissolved in a solvent, and the grafting monomer is added and graft-copolymerized. In any case, the reaction is preferably carried out in the presence of a radical initiator in order to perform graft-copolymerization with good efficiency. The grafting reaction is carried out usually at a temperature of 60 to 350°C. The proportion of the radical initiator is usually 0.001 to 1 part by weight per 100 parts by weight of the unmodified ethylene/alpha-olefin random copolymer. The radical initiator may be an organic peroxide, an organic perester or an azo compound. Specific examples include benzoyl peroxide, dichlorobenzoyl peroxide, dicumyl peroxide, di-tert-butyl peroxide, 2,5-dimethyl-2,5-di(peroxybenzoate)hexyne-3,1,4-bis(tert-butylperoxyisopropyl)benzene, lauroyl peroxide, tert-butyl peracetate, 2,5-dimethyl-2,5-di (tert-butylperoxy) hexyne-3,2,5-dimethyl-2,5-di-(tert-butylperoxy) hexane, tert-butyl perbenzoate, tert-butyl perphenylacetate, tert-butyl perisobutyrate, tert-butyl per-sec-octoate, tert-butyl perpivalate, cumyl perpivalate, tert-butyl perdiethylacetate, azobisisobutyronitrile and dimethyl azoisobutyrate. Among these, dialkyl peroxides such as dicumyl peroxide, di-tert-butyl peroxide, 2,5-dimethyl-2,5-dimethyl-2,5-di(tert-butylperoxy)hexane and 1,4-bis(tert-butylperoxyisopropyl)benzene are preferred.

The modified copolymer used in this invention may be mixed with an unmodified ethylene/alpha-olefin random copolymer to form the modified copolymer layer (B) of the laminated structure of the invention so long as the amount of the unsaturated carboxylic acid or its derivative grafted in the mixture is in the range of 0.01 to 10% by weight. Furthermore, the modified copolymer used in this invention may be mixed with a modified or unmodified ethylene/alpha-olefin random copolymer having a crystallinity of more than 30% to form the modified copolymer layer (B) of the laminated structure of the invention so long as the crystallinity of the mixture is less than 30%.

A heat stabilizer, a weatherability stabilizer, an antistatic agent, a pigment, a dye, a corrosion inhibitor, etc, may be incorporated in one or more of the layers (A), (B) and (C) forming the laminated structure of this invention so long as the additives do not impair the objects of this invention.

The laminated structure of this invention may, for example, be in the form of a film, sheet or bottle.

The laminated structure of this invention may be produced, for example, by a method which comprises melting the polymers for the three layers in different extruders, feeding the molten polymers into a die of a three-layer structure, and co-extruding them with the modified copolymer layer (B) as an interlayer, or a method (so-called sandwich laminate method) which comprises forming the polyester layer (A) and the saponified olefin/vinyl acetate copolymer layer or the polyamide resin layer (C) separately, and melt-extruding the modified copolymer as an interlayer into between the layers (A) and (C). If the laminated structure to be produced is in the form of a bottle, a keg, a pipe or a tube, the co-extrusion molding method can be used advantageously. Furthermore, the use of the co-extrusion molding method is preferred because it can easily give a high interfacial adhesion.

The laminated structure of this invention may be stretched monoaxially or biaxially in order to improve rigidity, transparency, mechanical strength, etc. or impart shrinkability. There is no particular restriction on the stretching conditions. Generally, the stretching is carried out at a temperature of 70 to 150°C at a stretch ratio of 2 to 10 times in the case of monoaxial stretching and at a stretch ratio of 2 to 10 times in the longitudinal direction and 2 to 10 times in the transverse direction in the case of biaxial stretching.

The thickness of each of the layers of the laminated structure can be properly determined depending upon the end use of the laminated structure. Usually, if the laminated structure is a film or sheet, the polyester resin layer (A) preferably has a thickness of 0.02 to 5 mm, and the layers (B) and (C) preferably have a thickness of 0.01 to 1 mm. If the laminated structure is a container, the polyester resin layer (A) preferably has a thickness of 0.1 to 5 mm, and the layer (B) or (C) preferably has a thickness of 0.01 to 1 mm.

The laminated structure of this invention may comprise three layers (A), (B) and (C), or may comprise 5 or more layers additionally having another kinds of polymer layers such as polyolefin. An example of the multilayer laminate is one comprising, for example, the polyester layer (A)/the modified random copolymer layer (B)/the saponified olefin-vinyl acetate copolymer layer or the polyamide resin layer (C)/the modified random copolymer layer (B)/a polypropylene layer.

Depending upon its use, the laminated structure of this invention may be a 5-layer structure comprising three types of polymer, which, for example, comprises the polyester resin layer (A)/modified random copolymer layer (B)/saponified olefin-vinyl acetate copolymer layer or the polyamide resin layer (C)/modified random copolymer layer (B)/polyester resin layer (A).

The laminated structure of this invention can be used, for example as packaging film or bottles for foods and medicines since it has transparency, flavor retaining property and heat resistance which are the characteristic features of the polyester and resistance to gas permeation which is the characteristic feature of the saponified olefin/vinyl acetate copolymer or the polyamide resin, and possesses a high interfacial adhesion in the initial stage and after stretching.

The following examples illustrate the present invention in greater detail. It should be understood that unless the invention departs from its scope described and claimed herein, it is not to be limited in any way to these examples.

EXAMPLE 1

A three-layer case sheet was formed under the following conditions by using maleic anhydride-grafted ethylene/propylene random copolymer (MAH-EPR-1 ; MFR$_2$ 0.5 g/10 min., the amount of maleic anhydride grafted 0.5 g/100 g polymer, ethylene content 80 mole%, density 0.865 g/cm$^3$, crystallinity 4%), polyethylene terephthalate (PET ; tradename Mitsui PET J 135, a product of Mitsui PET Resin Co., Ltd.), and a saponified product of ethylene/ vinyl acetate copolymer (EVOH ; MFR$_2$ 1.3 g/10 min., density 1.19 g/cm$^3$, ethylene content 32 mole% ; tradename Kuraray Eval EP-F, a product of Kuraray Inc.).

Film layer construction :

PET/MAH-EPR-1/EVOH = 120/60/120 micrometers

Extruder :
40 mmØ extruder 280°C (for PET)
40 mmØ extruder 210°C (for MAH-EPR-1)
40 mmØ extruder 210°C (for EVOH)
Molding speed : 10 meters/min.

The interfacial adhesion strength (F$_1$, g/15 mm width) between the PET layer and the MAH-EPR-1 layer of the resulting three-layer sheet, and the interfacial adhesion strength (F$_2$, g/15 mm width) between the EVOH layer and the MAH-EPR-1 layer were measured by T-peel method at a peeling speed of 300 mm/min. The transparency of the resulting sheet was evaluated by using a haze meter. The three layer sheet was heated at 80°C for 10 minutes, and at this temperature stretched simultaneously to three times longitudinally and to three times transversely to prepare a three-layer stretched sheet. Subsequently, the sheet was cooled to room temperature, and the interfacial adhesion strength (F$_3$, g/15 mm width) between the PET layer and the MAH-EPR-1 layer and the interfacial adhesion strength (F$_4$, g/15 mm width) between the EVOH layer and the MAH-EPR-1 layer in the resulting stretched sheet were measured by T-peel at a peeling speed of 300 mm/min. The transparency of the three-layer stretched sheet was evaluated by using a haze meter. The results are shown in Table 1.

EXAMPLE 2

Example 1 was repeated except that a maleic anhydride-grafted ethylene/propylene random copolymer (MAH-EPR-2 ; MFR$_2$ 1.9 g/10 min., the amount of maleic anhydride grafted 0.1 g/100 g polymer, ethylene content 80 mole%, density 0.864 g/cm$^3$, crystallinity 4%) was used instead of MAH-EPR-1. The results are shown in Table 1.

EXAMPLE 3

Example 1 was repeated except that a composition (MFR$_2$ 1.1 g/10 min., the amount of maleic anhydride grafted 0.25 g/100 g of polymer, ethylene content 80 mole%, density 0.865 g/10 min., crystallinity 4%) formed by mixing 50 parts by weight of MAH-EPR-1 and 50 parts by weight of an unmodified ethylene/propylene random copolymer (EPR-1 ; MFR$_2$ 2.0 g/10 min., min., ethylene content 80 mole%, density 0.064 g/cm$^3$, crystallinity 4%) was used instead of MAH-EPR-1. The results are shown in Table 1.

EXAMPLE 4

Example 1 was repeated except that a composition (MFR$_2$ 1.4 g/10 min., the amount of maleic anhydride grafted 0.256 g/100 g of polymer, density 0.874 g/cm$^3$, crystallinity 9%) obtained by mixing 50 parts by weight of MAH-EPR-1 and 50 parts by weight of unmodified ethylene/1-butene random copolymer (EBR-1 ; MFR$_2$ 4.0 g/10 min., ethylene content 90 mole%, density 0.885 g/cm$^3$, crystallinity 16%) was used instead of MAH-EPR-1. The results are shown in Table 1.

EXAMPLE 5

Example 1 was repeated except that a composition (MFR$_2$ 1.3 g/10 min., the amount of maleic anhydride grafted 0.25 g/100 g of polymer, density 0.874 g/cm$^3$, crystallinity 9%) obtained by mixing 50 parts by weight of maleic anhydride-grafted ethylene/1-butene random copolymer (MAH-EBR-1 ; MFR$_2$ 3.2 g/10 min., the amount of maleic anhydride grafted 0.5 g/100 g of polymer, ethylene content 90 mole%, density 0.885 g/cm$^3$, crystallinity 14%) with 50 parts by weight of EPR-1 used in Example 3 was used instead of MAH-EPR-1. The results are shown in Table 1.

## EXAMPLE 6

Example 1 was repeated except that nylon 6 (trademark Aramine CM1021XF, a product of Toray Co., Ltd.) was used instead of EVOH, and the temperature of the extruder for nylon was adjusted to 250°C. The results are shown in Table 1.

## EXAMPLE 7

Example 1 was repeated except that PET-G (amorphous polyethylene terephthalate-type copolymer resulting from substitution of 1,4-cyclohexanedimethanol for part of the glycol component; trademark KODAR PETG6763, a product of Eastmann Chemical) was used instead of PET and a non-stretched three-layer T-die sheet was formed. The interfacial adhesion strengths and transparency of the non-stretched sheet were evaluated as in Example 1. The results are shown in Table 1.

## COMPARATIVE EXAMPLE 1

Example 1 was repeated except that EPR-1 used in Example 3 was used instead of MAH-EPR-1. The results are shown in Table 1.

## COMPARATIVE EXAMPLE 2

Example 1 was repeated except that maleic anhydride-grafted LDPE (MAH-LDPE-1, $MFR_2$ = 3.0 g/10 min., the amount of maleic anhydride grafted 0.3 g/100 g of polymer, density 0.920 g/cm³, crystallinity 50%) was used instead of MAH-EPR-1. The results are shown in Table 1.

## COMPARATIVE EXAMPLE 3

Example 1 was repeated except that a molten mixture ($MFR_2$ 1.5 g/10 min., the amount of maleic anhydride grafted 0.21 g/100 g of polymer, density 0.907 g/cm³, crystallinity 40%) obtained by mixing 70 parts by weight of maleic anhydride-grafted polyethylene (MAH-PE; $MFR_2$ 2.0 g/10 min., the amount of maleic anhydride grafted 0.3 g/100 g of polymer, density 0.925 g/cm³, crystallinity 55%) and 30 parts by weight of EPR-1 used in Example 3 was used instead of MAH-EPR-1. The results are shown in Table 1.

## COMPARATIVE EXAMPLE 4

Comparative Example 3 was repeated except that MAH-EPR-1 used in Example 1 was used instead of EPR-1 used in Comparative Example 3. The results are also shown in Table 1.

EP 0 230 344 B1

## Table 1

| | Unstretched Film | | | Stretched Film | | |
|---|---|---|---|---|---|---|
| | $F_1$ (g/15mm width) | $F_2$ (g/15mm width) | Haze (%) | $F_3$ (g/15mm width) | $F_4$ (g/15mm width) | Haze (%) |
| Example 1 | 1200 | Unpeelable | 1.0 | 370 | Unpeelable | 0.6 |
| 2 | 1050 | 1270 | 0.9 | 290 | 380 | 0.5 |
| 3 | 1140 | Unpeelable | 1.0 | 340 | 450 | 0.6 |
| 4 | 970 | Unpeelable | 1.1 | 270 | 340 | 0.7 |
| 5 | 940 | Unpeelable | 1.1 | 320 | 330 | 0.7 |
| 6 | 1250 | Unpeelable | 0.9 | 380 | Unpeelable | 0.5 |
| 7 | 1300 | Unpeelable | 0.8 | - | - | - |
| Comparative Example 1 | 20 | 30 | 0.9 | 10 | 10 | 0.5 |
| 2 | 150 | 700 | 2.5 | 20 | 30 | 1.4 |
| 3 | 470 | 1500 | 4.2 | 40 | 60 | 2.0 |
| 4 | 520 | Unpeelable | 4.6 | 50 | 70 | 2.3 |

## Claims

1. A laminated structure which comprises, in order ;
(A) a layer of a polyester,
(B) a layer of modified ethylene/alpha-olefin random copolymer, or a mixture of modified copolymer with unmodified copolymer, either the modified copolymer or the mixture containing 0.01 to 10% by weight, based on the trunk ethylene/alpha-olefin random copolymer, of an unsaturated carboxylic acid or derivative thereof grafted thereto, and having an ethylene content of 75 to 95 mole%, a melt flow rate of 0.1 to 50 g/10 min., a density of 0.850 to 0.905 g/cm$^3$ and a crystallinity, determined by X-ray, of less than 30%, and
(C) a layer of a saponified olefin/vinyl acetate copolymer having an olefin content of 15 to 60 mole% and a degree of saponification of at least 50%, or a polyamide resin layer.

2. A laminated structure according to claim 1 wherein the amount of grafted unsaturated carboxylic acid or derivative is 0.1 to 5% by weight.

3. A laminated structure according to claim 1 or 2 wherein the modified ethylene/alpha-olefin random copolymer has an ethylene content of 77 to 93 mole%.

4. A laminated structure according to claim 1, 2 or 3 wherein the modified ethylene/alpha-olefin random copolymer has a melt flow rate of 0.2 to 20 g/10 min.

5. A laminated structure according to any one of the preceding claims wherein the modified ethylene/alpha-olefin random copolymer has a density of 0.860 to 0.900 g/cm$^3$.

6. A laminated structure according to any one of the preceding claims wherein the modified ethylene/alpha-olefin random copolymer has a crystallinity of less than 10%.

7. A laminated structure according to any one of the preceding claims wherein the polyester has units derived from an aromatic dicarboxylic acid and an aliphatic alcohol.

8. A laminated structure according to any one of the preceding claims wherein the saponified olefin/vinyl acetate copolymer has an olefin content of 25 to 50 mole% and a degree of saponification of at least 90%.

9. A laminated structure according to any one of the claims 1 to 7 wherein the polyamide resin is nylon 6.

10. A laminated structure according to any one of the preceding claims wherein the layer (A) has a thickness of 0.02 to 5 mm, the layer (B) has a thickness of 0.01 to 1 mm, and the layer (C) has a thickness of 0.01 to 1 mm.

## Ansprüche

1. Laminierte Struktur, umfassend in der Reihenfolge :
(A) eine Schicht eines Polyesters,
(B) eine Schicht von modifiziertem statistischem Ethylen/Olefin-Copolymer oder einem Gemisch aus modifiziertem Copolymer mit nicht modifiziertem Copolymer, wobei entweder das modifizierte Copolymer oder das Gemisch 0,01 bis 10 Gew.-%, bezogen auf das statistische Stamm-Ethylen/α-Olefin-Copolymer, einer ungesättigten Carbonsäure oder eines Derivats davon aufgepropft enthält, und einen Ethylengehalt von 75 bis 95 mol-%, eine Fließfähigkeit von 0,1 bis 50 g/10 min, eine Dichte von 0,850 bis 0,905 g/cm$^3$ und eine Kristallinität, bestimmt durch Röntgenstrahlen, von weniger als 30% aufweist, und
(C) eine Schicht eines verseiften Olefin/Vinylacetat-Copolymers mit einem Olefingehalt von 15 bis 60 mol-% und einem Verseifungsgrad von weniger als 50%, oder eine Polyamidharzschicht.

2. Laminierte Struktur nach Anspruch 1, wobei die Menge an aufgepropfter ungesättigter Carbonsäure oder einem Derivat davon 0,1 bis 5 Gew.-% beträgt.

3. Laminierte Struktur nach Anspruch 1 oder 2, wobei das modifizierte statistische Ethylen/α-Olefin-Copolymer einen Ethylengehalt von 77 bis 93 mol-% aufweist.

4. Laminierte Struktur nach Anspruch 1, 2 oder 3, wobei das modifizierte statistische Ethylen/α-Olefin-Copolymer eine Fließfähigkeit von 0,2 bis 20 g/10 min aufweist.

5. Laminierte Struktur nach einem der vorangehenden Ansprüche, wobei das modifizierte statistische Ethylen/α-Olefin-Copolymer eine Dichte von 0,860 bis 0,900 g/cm$^3$ besitzt.

6. Laminierte Struktur nach einem der vorangehenden Ansprüche, wobei das modifizierte statistische Ethylen/α-Olefin-Copolymer eine Kristallinität von weniger als 10% besitzt.

7. Laminierte Struktur nach einem der vorangehenden Ansprüche, wobei der Polyester Einheiten aufweist, abgeleitet von einer aromatischen Dicarbonsäure und einem aliphatischen Alkohol.

8. Laminierte Struktur nach einem der vorangehenden Ansprüche, wobei das verseifte Olefin/Vinylacetat-Copolymer einen Olefingehalt von 25 bis 50 mol-% und einen Verseifungsgrad von zumindest 90% besitzt.

9. Laminierte Struktur nach einem der Ansprüche 1 bis 7, wobei das Polyamid-Harz Nylon-6 ist.

10. Laminierte Struktur nach einem der vorangehenden Ansprüche, wobei die Schicht (A) eine Dicke von 0,02 bis 5 mm, die Schicht (D) eine Dicke von 0,01 bis 1 mm und die Schicht (C) eine Dicke von 0,01 bis 1 mm hat.

## Revendications

1. Structure stratifiée qui comprend, dans l'ordre :
(A) une couche d'un polyester,
(B) une couche d'un copolymère statistique modifié d'éthylène et d'alpha-oléfine, ou d'un mélange de copolymère modifié avec du copolymère non modifié, le copolymère modifié ou le mélange contenant de 0,01 à 10% en poids, par rapport au copolymère statistique d'éthylène et d'alpha-oléfine constituant le squelette, d'un acide carboxylique insaturé ou d'un dérivé d'un tel acide, greffé sur celui-là, et présentant une teneur en éthylène de 75 à 95% en moles, un indice de fluidité à chaud de 0,1 à 50 g/10 min, une masse volumique de 0,850 à 0,905 g/cm$^3$ et un taux de cristallinité, déterminé par rayons X, inférieur à 30%, et
(C) une couche d'un copolymère saponifié d'oléfine et d'acétate de vinyle présentant une teneur en oléfine de 15 à 60% en moles et un degré de saponification d'au moins 50%, ou une couche de résine de polyamide.

2. Structure stratifiée conforme à la revendication 1, dans laquelle la proportion d'acide carboxylique insaturé ou de dérivé d'un tel acide greffé vaut de 0,1 à 5% en poids.

3. Structure stratifiée conforme à la revendication 1 ou 2, dans laquelle le copolymère statistique modifié d'éthylène et d'alpha-oléfine présente une teneur en éthylène de 77 à 93% en moles.

4. Structure stratifiée conforme à la revendication 1, 2 ou 3, dans laquelle le copolymère statistique modifié d'éthylène et d'alpha-oléfine présente un indice de fluidité à chaud de 0,2 à 20 g/10 min.

5. Structure stratifiée conforme à l'une quelconque des revendications précédentes, dans laquelle le copolymère statistique modifié d'éthylène et d'alpha-oléfine présente une masse volumique de 0,860 à 0,900 g/cm$^3$.

6. Structure stratifiée conforme à l'une quelconque des revendications précédentes, dans laquelle le copolymère statistique modifié d'éthylène et d'alpha-oléfine présente un taux de cristallinité inférieur à 10%.

7. Structure stratifiée conforme à l'une quelconque des revendications précédentes, dans laquelle le polyester comporte des motifs qui dérivent d'un acide dicarboxylique aromatique et d'un alcool aliphatique.

8. Structure stratifiée conforme à l'une quelconque des revendications précédentes, dans laquelle le copolymère saponifié d'oléfine et d'acétate de vinyle présente une teneur en oléfine de 25 à 50% en moles et un degré de saponification d'au moins 90%.

9. Structure stratifiée conforme à l'une quelconque des revendications 1 à 7, dans laquelle la résine de polyamide est du nylon 6.

10. Structure stratifiée conforme à l'une quelconque des revendications précédentes, dans laquelle la couche (A) présente une épaisseur de 0,02 à 5 mm, la couche (B) présente une épaisseur de 0,01 à 1 mm et la couche (C) présente une épaisseur de 0,01 à 1 mm.